# EUROPEAN PATENT SPECIFICATION

(11) **EP 2 525 443 B1**
(45) Date of publication and mention of the grant of the patent: **15.01.2014**
(21) Application number: 12002471.6
(22) Date of filing: 05.04.2012
(51) Int. Cl.: H01R 43/00, H01R 13/52, H01R 13/74

(54) **Vehicle-side connector and mounting method therefor**
Fahrzeugseitiger Verbinder und Montageverfahren dafür
Connecteur latéral pour un véhicule et son procédé de montage

(30) Priority: 17.05.2011 JP 2011110686
(43) Date of publication of application: 21.11.2012
(73) Proprietor: Sumitomo Wiring Systems, Ltd., Yokkaichi-city, Mie 510-8503 (JP)
(72) Inventor: Ichio, Toshifumi, Yokkaichi-city Mie 510-8503 (JP); Takada, Akinori, Yokkaichi-city Mie 510-8503 (JP)
(74) Representative: Müller-Boré & Partner Patentanwälte

(56) References cited:
- EP-A2- 1 059 697
- JP-A- 7 029 631
- US-A- 5 350 312
- US-A1- 2010 112 841

## Description

The present invention relates to a vehicle-side connector to be connected to a charging connector at the time of charging and to a mounting method therefor.

A vehicle-side connector of this type is, for example, known from Japanese Unexamined Patent Publication No. H07-29631. A housing chamber facing the outside of a vehicle is provided on a body of the vehicle, and a vehicle-side connector is housed in this housing chamber. A tapered water guide portion inclined downward toward the outside of the vehicle is provided on the lower surface of the housing chamber and a drain port is provided at a lower end part of this water guide portion. The drain port is open downward and a drain hose is connected to this drain port. Water having entered the housing chamber is brought to the drain hose via the water guide portion and the drain port and is drained to a side below the housing chamber from this drain hose.

However, since the above drain port is arranged in the housing chamber and the drain hose connected to this drain port is arranged closer to the inside of the vehicle than the body, a battery may be wetted by water drained from the drain hose in the case of a vehicle type in which the battery is disposed below the housing chamber. Further, a pressure difference is created between the inside of the vehicle and the housing chamber, and the water in the drain hose may flow back to the housing chamber due to this pressure difference.

Further, document US 5,350,312 A discloses a feed connector consisting of feeding-side and receiving-side connectors. The feeding-side connector includes a casing consisting of split-type cases fastened to each other, a connector body slidably installed in a front half section of the casing, and a handle movably mounted in a rear half section of the casing such that it advances through rotation of a lever to push the connector body against the receiving-side connector, the handle also serving as lead wires-passing tube. The receiving-side connector includes a connector body with female terminals contained and locked therein and a shell sealingly fitted on the outer periphery of the connector body for receiving a front end portion of the casing of the feeding-side connector. The shell is, via a flange circumferentially formed on its outer periphery, bolted to an automobile body and, its open end is opened or closed by a cap hinged to the shell. Further, a terminal accommodating chamber, a rear holder and a waterproofing rubber are provided.

The present invention was completed in view of the above situation and an object thereof is to improve drainage properties of a connector.

This object is solved according to the invention by the features of the independent claims. Particular embodiments of the invention are subject of the dependent claims.

Accordingly, drainage properties are improved by preventing the reverse flow of drained fluid, liquid or water by draining fluid, liquid or water having entered a vehicle-side connector to the outside of a vehicle.

According to one aspect of the invention, there is provided a vehicle-side connector to be connected to a charging connector at the time of charging, comprising: a mounting plate which is to be fixed to a body part of a vehicle; a first tube portion which is so provided at the mounting plate as to at least partly penetrate through the mounting plate; a second tube portion projecting from the mounting plate toward the inside of the vehicle and have an open projecting end; a resilient plug which forms a sealed space in the second tube portion by sealing between a wire pulled into the inside of the vehicle from the interior of the first tube portion and an opening of the second tube portion; a plug holder which is mounted to the second tube portion to retain the resilient plug; at least one fluid guide portion which is provided in the sealed space and inclined downwardly toward the outside of the vehicle; and at least one drain port which penetrates though the mounting plate and drains fluid from the fluid guide portion to the outside of the vehicle.

According to this configuration, it is possible to form the sealed space in the second tube portion, bring liquid or fluid in this sealed space to the drain port by the liquid guide portion and drain the liquid to the outside of the vehicle from the drain port by mounting the resilient to the second tube portion. Further, since the sealed space communicates with the atmosphere through the drain port, the reverse flow of liquid or water from the drain port into the sealed space can be prevented regardless of a pressure variation inside the vehicle.

According to a particular embodiment, the second tube portion at least partly surrounds an outer peripheral side of the first tube portion over the entire circumference.

Particularly, the plug holder is mounted in the opening of the second tube portion to retain the resilient plug.

According to a further particular embodiment, there is provided a vehicle-side connector to be connected to a charging connector at the time of charging, comprising a mounting plate which is to be fixed to a body of a vehicle; an inner tube portion which is so provided at the mounting plate as to penetrate through the mounting plate; an outer tube portion which surrounds an outer peripheral side of the inner tube portion over the entire circumference in such a manner as to project from the mounting plate toward the inside of the vehicle and have an open projecting end; a rubber plug which forms a sealed space in the outer tube portion by sealing between a wire pulled into the inside of the vehicle from the interior of the inner tube portion and an opening of the outer tube portion; a rubber plug presser which is mounted in the opening of the outer tube portion to retain the rubber plug; a water guide portion which is provided in the sealed space and inclined downwardly toward the outside of the vehicle; and a drain port which penetrates though the mounting plate and drains water from the water guide portion to the outside of the vehicle.

According to this configuration, it is possible to form the sealed space in the outer tube portion, bring water in this sealed space to the drain port by the water guide portion and drain the water to the outside of the vehicle from the drain port by mounting the rubber plug in the opening of the outer tube portion. Further, since the sealed space communicates with the atmosphere through the drain port, the reverse flow of water from the drain port into the sealed space can be prevented regardless of a pressure variation inside the vehicle.

The following configurations are preferable as embodiments of the present invention.

The vehicle-side connector may further comprise at least one terminal fitting which is or is to be connected to an end of the wire and at least partly accommodated in the first tube portion (particularly the inner tube portion), and a retainer which is mounted to the first tube portion, particularly at least partly in an opening of the first (inner) tube portion, to retain the terminal fitting(s).

The resilient plug (particularly the rubber plug) may include a base plate portion formed with at least one seal hole through which the wire is inserted in a sealed state.

By doing so, the resilient plug (rubber plug) can be more easily fixed particularly by at least partly arranging the base plate portion of the resilient plug (rubber plug) between the retainer and the plug holder (particularly the rubber plug presser).

The resilient plug (rubber plug) may include a peripheral wall portion particularly being tapered and standing from the peripheral edge of the base plate portion.

The fluid (water) guide portion may be provided from the peripheral wall portion to the second (particularly outer) tube portion.

If the fluid (water) guide portion is provided only in the second (outer) tube portion without providing the resilient (rubber) plug with the peripheral wall portion, a long fluid (water) guide portion needs to be formed from the opening of the outer tube portion to the mounting plate and the position of the drain port is located more downward (more away from the first or inner tube portion), wherefore the mounting plate tends to become longer in a downward direction. In this respect, since the resilient (rubber) plug is provided with the (particularly tapered) peripheral wall portion and the fluid (water) guide portion is formed from this peripheral wall portion to the second (outer) tube portion according to the above configuration, the fluid (water) guide portion in the second (outer) tube portion can be made shorter, with the result that the position of the drain port can be located more upward (closer to the inner tube portion) and the mounting plate can be made shorter in a vertical direction.

Forward and backward movements of the resilient plug may be prevented by mounting the base plate portion between the retainer and the plug holder in forward and backward directions substantially without forming any clearance.

The fluid guide portion may comprise a portion having a tapered shape as to be enlarged downwardly toward the mounting plate.

Fluid having entered a portion of the first tube portion and reached the sealed space may be guided obliquely downwardly via one or more drain plates and brought to a drain channel along an inclined surface of the resilient plug and then drained to the outside of the vehicle through the drain port.

According to a further aspect of the invention, there is provided a mounting or assembling method for a vehicle-side connector, in particular according to the above aspect of the invention or a particular embodiment thereof, to be connected to a charging connector at the time of charging, comprising the following steps: fixing a mounting plate to a body part of a vehicle; providing an first tube portion at the mounting plate as to at least partly penetrate through the mounting plate; providing a second tube portion projecting from the mounting plate toward the inside of the vehicle and have an open projecting end; mounting a resilient plug such as to form a sealed space in the second tube portion by sealing between a wire pulled into the inside of the vehicle from the interior of the first tube portion and an opening of the second tube portion; mounting a plug holder to the second tube portion to retain the resilient plug; providing at least one fluid guide portion in the sealed space and inclined downwardly toward the outside of the vehicle; and providing at least one drain port which penetrates though the mounting plate and drains fluid from the fluid guide portion to the outside of the vehicle.

According to a particular embodiment, the second tube portion may be provided so as to at least partly surround an outer peripheral side of the first tube portion over the entire circumference.

Particularly, the plug holder may be mounted in the opening of the second tube portion to retain the resilient plug.

The method particularly may further comprise the following steps: connecting at least one terminal fitting to an end of the wire and at least partly accommodated in the first tube portion; and mounting a retainer in an opening of the first tube portion to retain the terminal fitting.

Further particularly, the resilient plug may include a base plate portion formed with at least one seal hole through which the wire is inserted in a sealed state, wherein forward and backward movements of the resilient plug preferably are prevented by mounting the base plate portion between the retainer and the plug holder in forward and backward directions substantially without forming any clearance.

According to the above, it is possible to prevent the reverse flow of fluid, liquid ir water from a drain port to a sealed space by draining fluid, liquid or water having entered a vehicle-side connector to the outside of a vehicle.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is an exploded perspective view of a vehicle-side connector in an embodiment,
FIG. 2 is a perspective view of the vehicle-side connector,
FIG. 3 is a perspective view party in section showing an example of a drainage structure via drain plates,
FIG. 4 is a perspective view party in section showing an example of a drainage structure without via the drain plates,
FIG. 5 is a section showing the internal structure of the vehicle-side connector fixed to an outer panel when viewed sideways,
FIG. 6 is a front view of a housing,
FIG. 7 is a section along A-A of FIG. 6,
FIG. 8 is a side view of the housing,
FIG. 9 is a rear view of the housing,
FIG. 10 is a front view of a rubber plug,
FIG. 11 is a section along B-B of FIG. 10,
FIG. 12 is a front view of a rubber ring,
FIG. 13 is a side view of the rubber ring,
FIG. 14 is a front view of a rubber plug presser,
FIG. 15 is a section along C-C of FIG. 14,
FIG. 16 is a section along D-D of FIG. 14,
FIG. 17 is a side view of the rubber plug presser,
FIG. 18 is a front view of a retainer,
FIG. 19 is a section along E-E of FIG. 18, and
FIG. 20 is a side view of the retainer.

### <Embodiment>

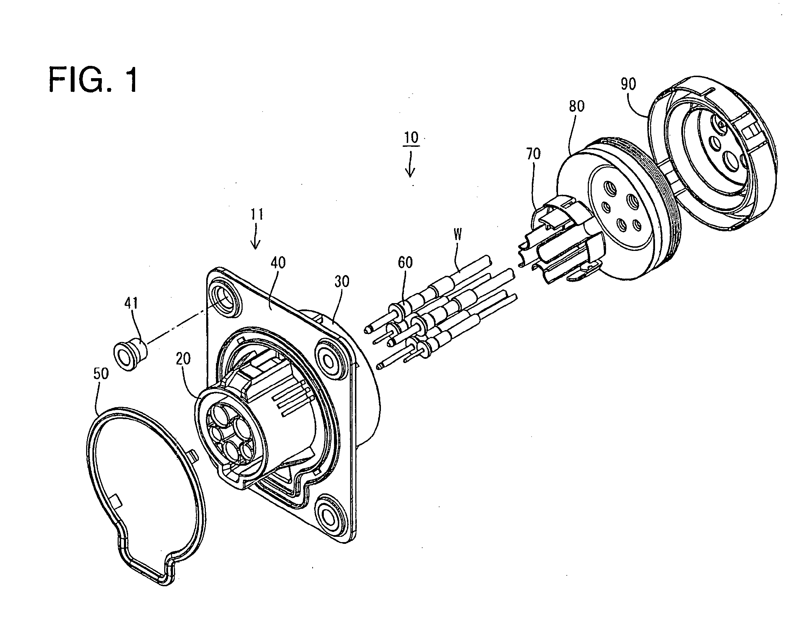

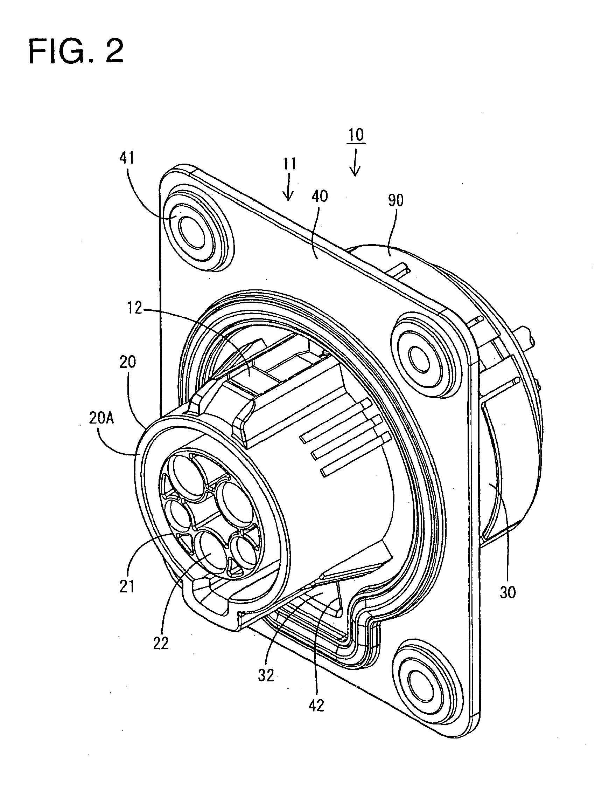

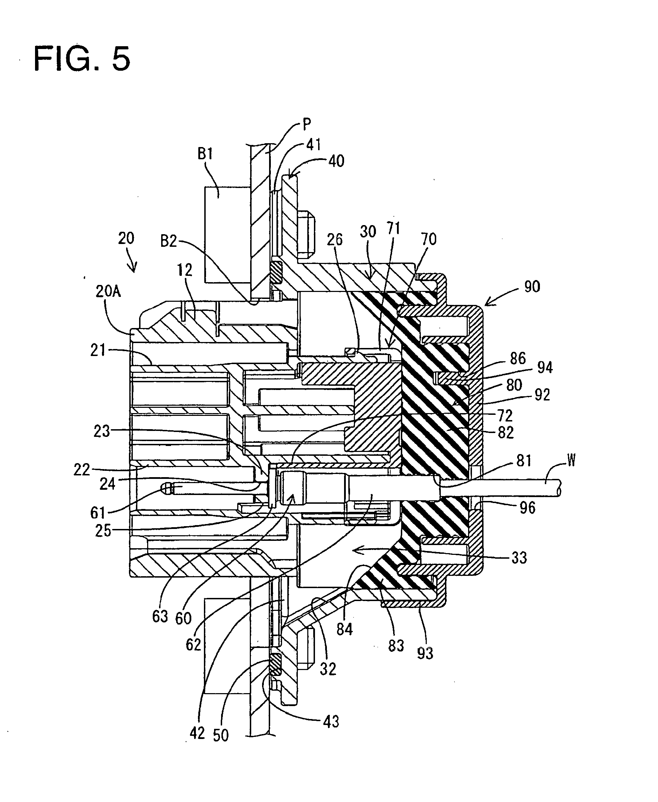

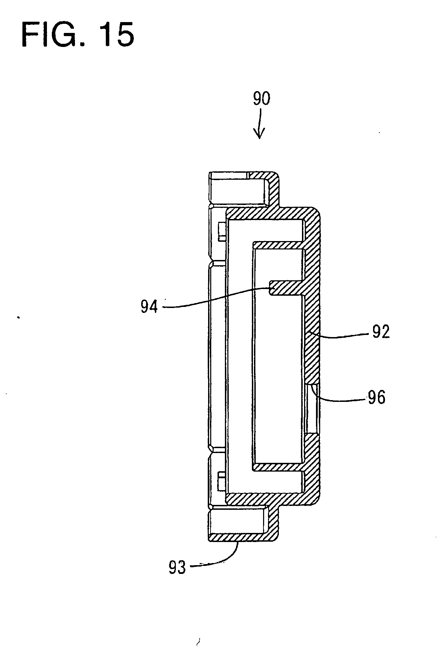

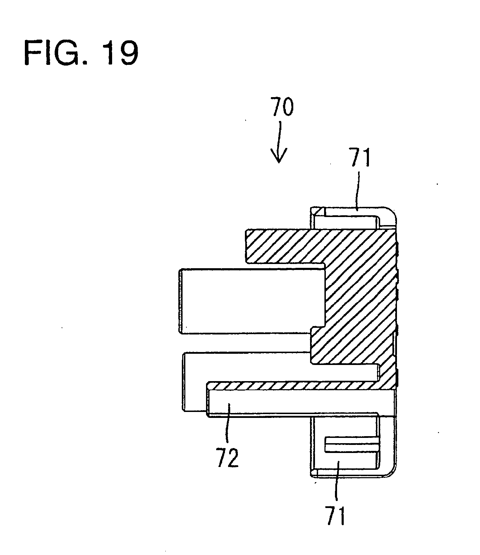

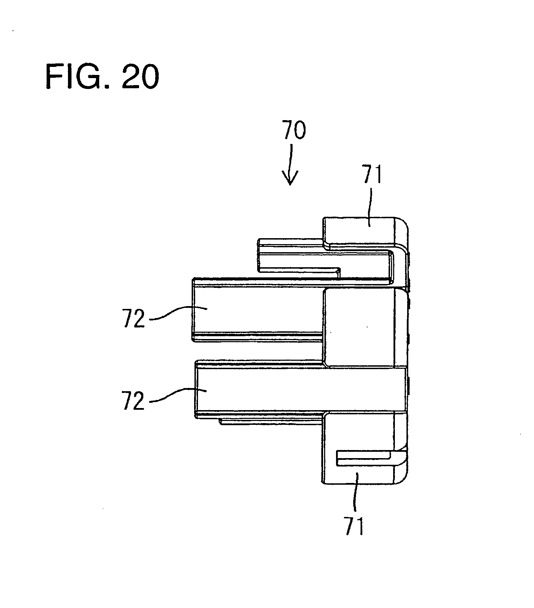

A particular embodiment of the present invention is described with reference to FIGS. 1 to 20. A vehicle-side connector 10 in this embodiment is to be connected to a battery (not shown) installed in an electric vehicle, a hybrid vehicle or the like, and is connected to a charging connector (not shown) at the time of charging into this battery. As shown in FIG. 5, the vehicle-side connector 10 includes a housing 11 to be fastened to a body part (such as an outer panel P forming a body) of the vehicle particularly by one or more bolts B1. A mounting hole B2 is formed in the body part (particularly outer panel) P and the housing 11 is to be mounted and fixed to the body part (outer panel) P through this mounting hole B2.

As shown in FIG. 1, the vehicle-side connector 10 includes the housing 11, a rubber ring 50 (as a particular sealing ring) to be mounted on the front side (frontal side) of the housing 11, one or more terminal fittings 60 to be at least partly accommodated in the housing 11, particularly a retainer 70 to be mounted on or to (particularly the back side (or rear side) of) the housing 11, a rubber plug 80 (as a particular resilient plug) to be mounted on the back side of the retainer 70 and a rubber plug presser 90 (as a particular plug holder) to be mounted to the housing 11 to hold the rubber plug 80, particularly on the back side of the rubber plug 80.

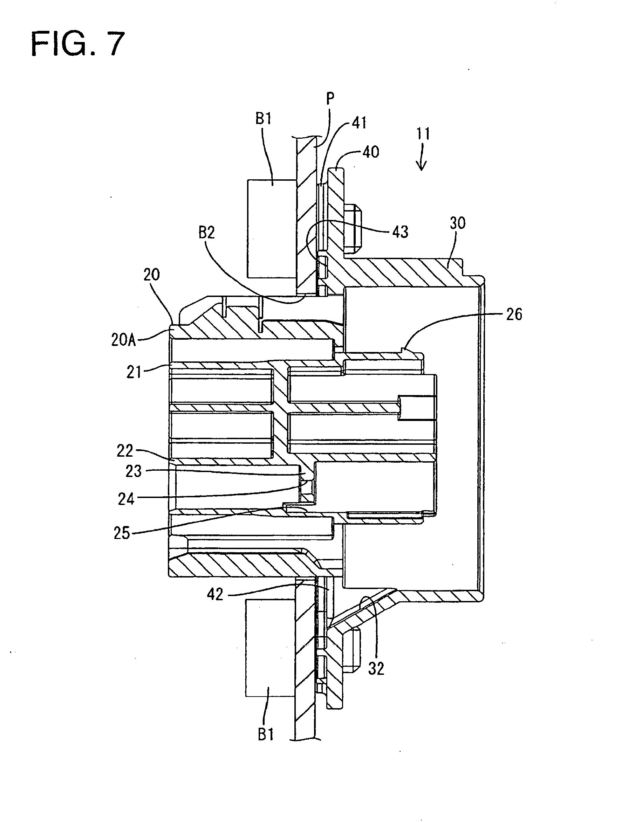

The housing 11 is made e.g. of synthetic resin and, as shown in FIG. 7, includes a mounting plate 40 to be fixedly mounted (particularly bolted) to the body part (particularly the outer panel) P, an inner tube portion 20 (as a particular first tube portion) integrally or unitarily formed to the mounting plate 40 in such a manner as to penetrate through the mounting plate 40, and an outer tube portion 30 (as a particular second tube portion) at least partly surrounding the outer periphery of the inner tube portion 20 (particularly over at least part of the longitudinal extension and/or over the entire circumference of the first tube portion 20) in such a manner as to substantially project toward the inside of the vehicle (rear side) from the mounting plate 40 and have an open projecting end. At least one lock portion 12 is provided on the outer or upper surface of a receptacle 20A of the inner tube portion 20 to be described later. A lock arm (not shown) provided in the charging connector is engageable with this lock portion 12, and the charging connector and the vehicle-side connector 10 are held in a connected state to perform charging by the engagement of the lock portion 12 and the lock arm in forward and backward directions.

The inner tube portion 20 includes the receptacle 20A particularly substantially having a cylindrical or tubular shape. The (particularly substantially cylindrical or tubular) receptacle 20A substantially projects forward from the mounting plate 40. A (particularly substantially cylindrical or tubular) terminal accommodating portion 21 in which the one or more terminal fittings 60 are to be at least partly accommodated is provided in the receptacle 20A. The terminal accommodating portion 21 particularly is formed with two types of larger and smaller (particularly substantially cylindrical or tubular) portions 22 which substantially are annularly arranged, and/or the adjacent (cylindrical or tubular) portions 22 are coupled to each other. The terminal accommodating portion 21 and the respective cylindrical portions 22 substantially project in forward and backward directions through the mounting plate 40.

A partition wall 23 for partitioning the internal space into front and rear sides is provided in an intermediate part (particularly substantially in a central part) of each cylindrical portion 22, and a terminal insertion hole 24 for allowing insertion of a terminal connecting portion 61 of the terminal fitting 60 to be described later is formed in this partition wall 23. Further, at least one escape hole 25 for allowing water or any other liquid having entered the cylindrical portion 22 from front to escape to the rear side is formed substantially below the terminal insertion hole 24 in the partition wall 23.

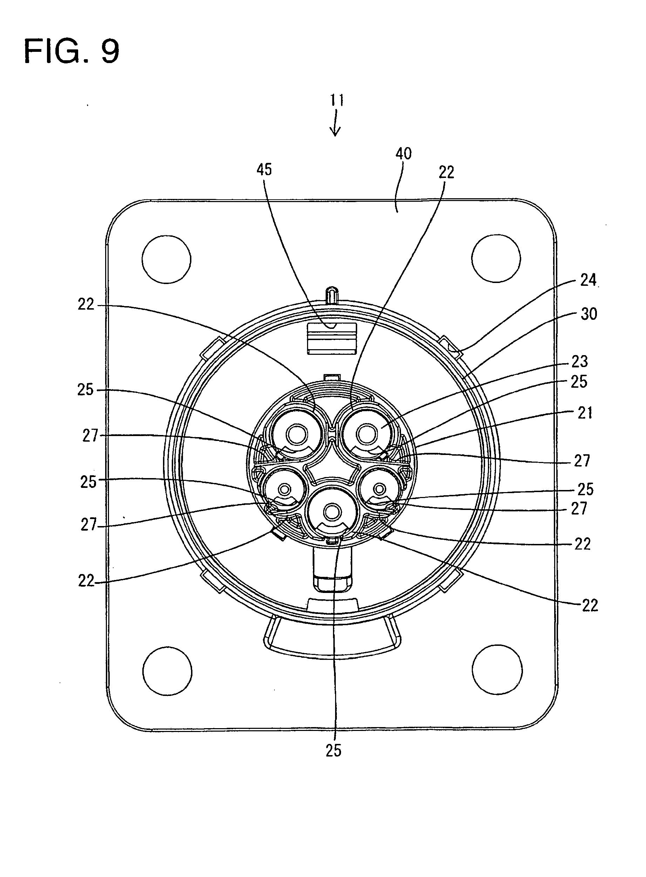

As shown in FIG. 9, a drain plate 27 in the form of a downwardly inclined (particularly substantially flat) plate is connected to the lower side of each cylindrical portion 22 behind the mounting plate 40. This drain plate 27 is connected to the outer periphery of the terminal accommodating portion 21. Further, the drain plate 27 is inclined downwardly from the lower edge of the escape hole 25 and connected to the outer periphery of the terminal accommodating portion 21. Thus, water or any other liquid can be drained from the escape hole 25 to an outer peripheral side of the terminal accommodating portion 21 along the upper surface of the drain plate 27.

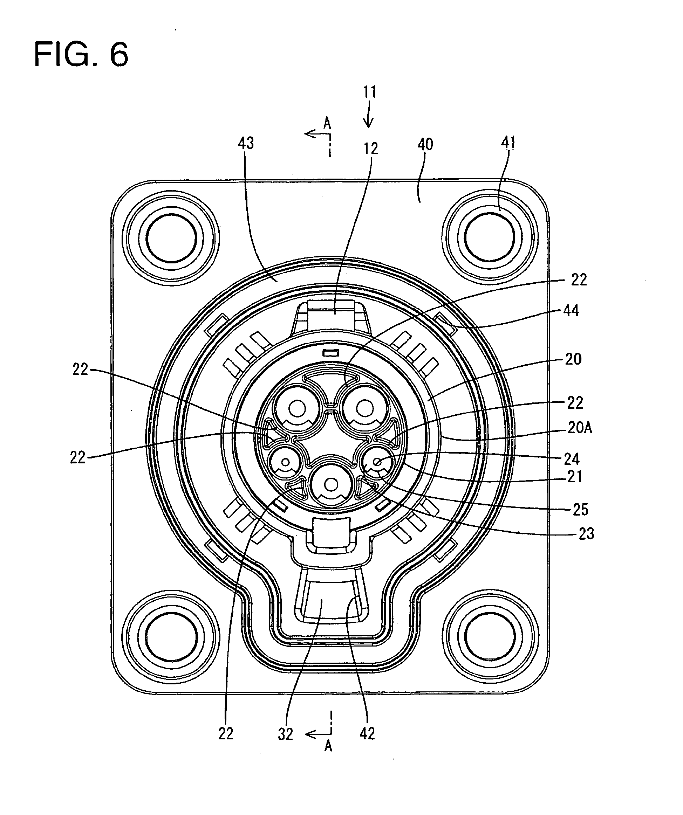

As shown in FIG. 6, the mounting plate 40 bulges out radially outwardly from the outer peripheral surface of the inner tube portion 20 and/or particularly substantially has a substantially rectangular outer shape. Specifically, one or more (particularly metal) collars 41 are press-fitted on respective (e.g. four) corners of the mounting plate 40. Both ends (inner and/or outer) of the collars 41 project from surfaces of the mounting plate 40. Thus, when the housing 11 is fixed (particularly bolted or riveted) to the outer panel P, the collars 41 are brought into direct contact with the outer panel P and the housing 11 is firmly fixed to the outer panel P.

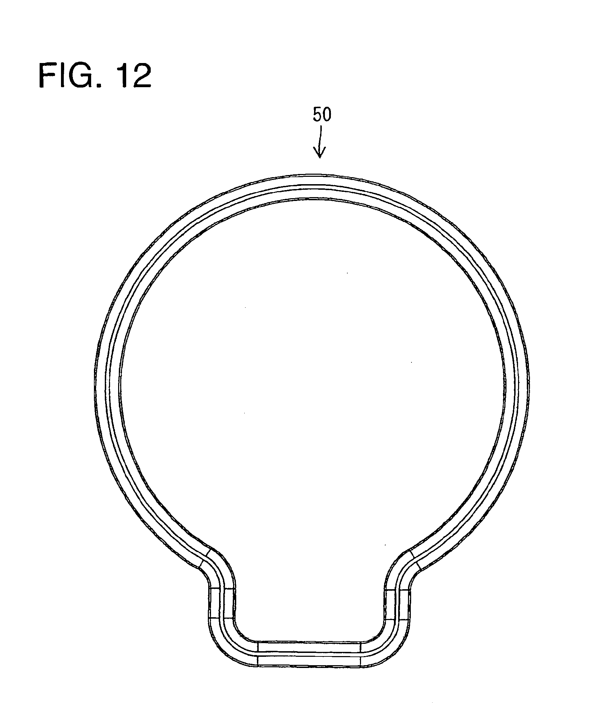

At least one drain port 42 is formed to penetrate through the mounting plate 40 substantially below the inner tube portion 20. A mounting groove 43 which at least partly surrounds the inner tube portion 20 and the drain port 42 together is formed by recessing the front surface of the mounting plate 40. This mounting groove 43 is shaped to substantially extend downwardly while circumventing the drain port 42. In conformity with this, the rubber ring 50 is so shaped that a lower end portion substantially extends downwardly as shown in FIG. 12.

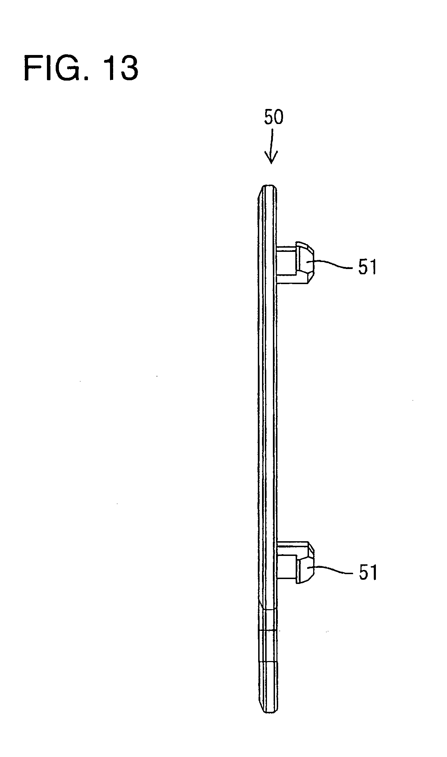

The rubber ring 50 (as a particular seal ring) made of a resilient material such as rubber is mounted into the mounting groove 43. As shown in FIG. 6, one or more, particularly a plurality of insertion holes 44 are formed in the bottom surface of the mounting groove 43 particularly while substantially being circumferentially spaced apart. One or more, particularly a plurality of insertion pieces 51 provided on the rubber ring 50 as shown in FIG. 13 are to be at least partly inserted into these insertion holes 44, whereby the rubber ring 50 is held and retained in the mounting groove 43.

The terminal fitting 60 is formed by press-working (particularly bending, folding and/or embossing) an electrically conductive (particularly metal) flat plate and, as shown in FIG. 1 or 5, includes the terminal connecting portion 61 (particularly substantially in the form of a round bar), a wire connecting portion 62 provided behind the terminal connecting portion 61, and a front stop portion 63 particularly formed between the terminal connecting portion 61 and the wire connecting portion 62. The terminal connecting portion 61 substantially matches the terminal insertion hole 24 in the (particularly cylindrical) portion 22 and at least partly is insertable thereinto. The front stop portion 63 comes into contact with the partition wall 23 (particularly substantially from behind) to stop the terminal fitting 60 at its proper position (particularly at its front end position). The wire connecting portion 62 has a cylindrical shape with an open rear end and is to be connected (particularly crimped, bent or folded and connected) to a core exposed at an end of a wire W (particularly such as by hexagonal crimping).

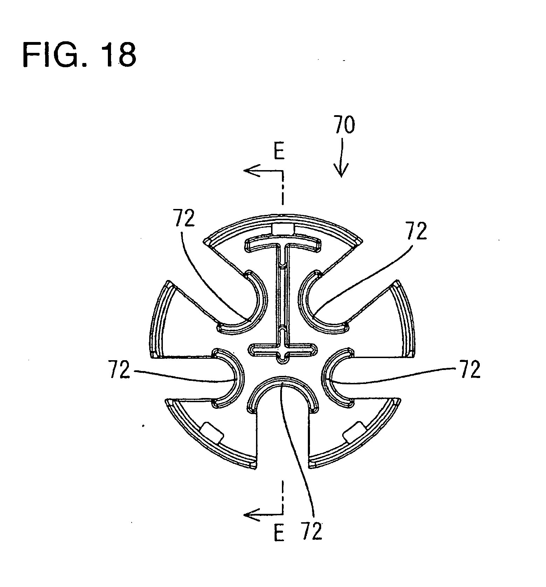

One or more, particularly a plurality of retaining projections 26 are provided on the outer peripheral surface of the inner tube portion 20. On the other hand, as shown in FIGS. 18 to 20, one or more, particularly a plurality of retaining pieces 71 engageable with the respective retaining projection(s) 26 in forward and backward directions FBD are provided on the peripheral wall of the retainer 70. Further, the retainer 70 includes one or more contact portions 72 which are to be at least partly inserted into the cylindrical portion(s) 22 to be brought into contact with the (front) stop portion(s) 63 from behind. In this way, the retainer 70 is fixed to the inner tube portion 20 and the respective terminal fitting(s) 60 is/are retained so as not to come out e.g. backward by the respective contact portion(s) 72 in a state where the (particularly plurality of) retaining piece(s) 71 is/are engaged with the (particularly plurality of) retaining projection(s) 26.

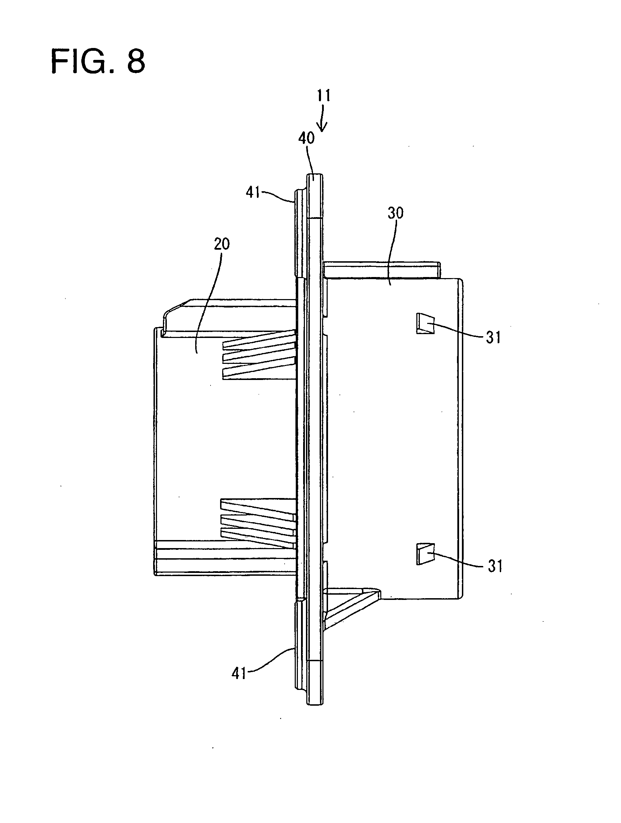

The outer tube portion 30 particularly substantially has a cylindrical outer shape one size larger than the inner tube portion 20 and/or is arranged coaxially with the inner tube portion 20. The rear end of the outer tube portion 30 particularly is located behind that of the inner tube portion 20. As shown in FIG. 8, one or more, particularly a plurality of locking projections 31 are provided on the outer peripheral surface of the outer tube portion 30. On the other hand, as shown in FIG. 7, at least one drain channel 32 connected to the drain port 42 is provided at the inner lower surface of the outer tube portion 30. The drain channel 32 particularly has such a tapered shape as to be enlarged downwardly toward the mounting plate 40.

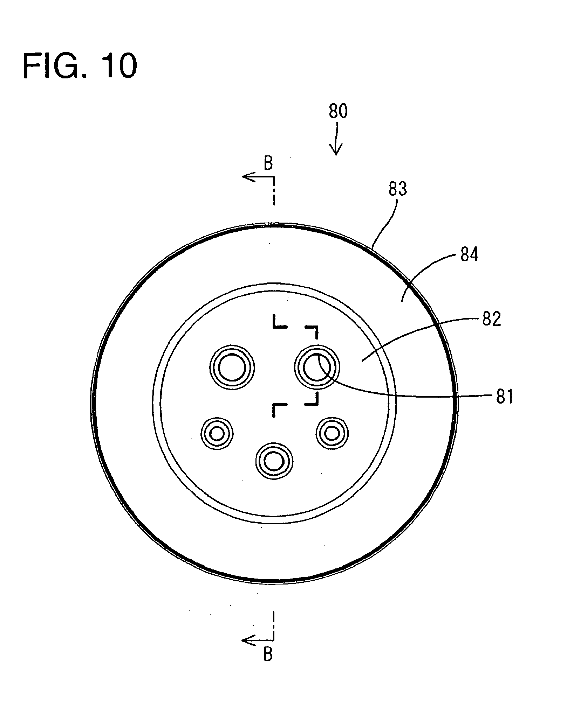

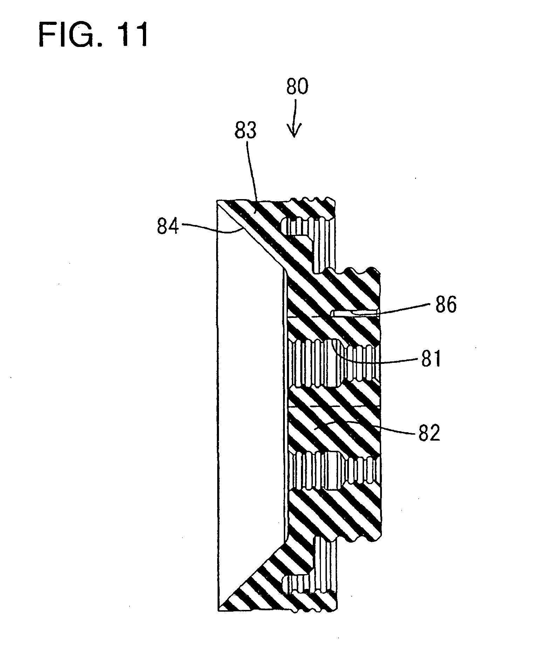

The rubber plug 80 (as a particular resilient plug) is made of a resilient material such as rubber and, as shown in FIGS. 10 and 11, includes a base plate portion 82 formed with one or more, particularly a plurality of seal holes 81 through which one or more wires W are to be inserted in a sealed state (wherein the seal holes 81 particularly come in two larger and smaller sizes and through which two types of larger and smaller wires W are to be inserted in a sealed state), and a tapered peripheral wall portion 83 standing from the peripheral edge of the base plate portion 82.

As shown in FIG. 11, the (particularly each) seal hole 81 penetrates through the base plate portion 82 substantially in forward and backward directions FBD (plate thickness direction) and particularly is composed of or comprises a large-diameter hole or portion arranged at a front side and a small-diameter hole or portion arranged at a rear side. The wire connecting portion 62 of the terminal fitting 60 is to be at least partly accommodated in a sealed state in (particularly the large-diameter hole of) the seal hole 81 and the wire W is accommodated in a sealed state in (particularly the small-diameter hole of) the seal hole 81. Note that one or more, particularly a plurality of annular lip portions are circumferentially provided in the seal hole 81, and these lip portions are squeezed (particularly substantially over the entire circumference) by the wire connecting portion 62 and the wire W, whereby a sealing function is fulfilled.

The front surface of the peripheral wall portion 83 particularly is or comprises an inclined surface 84 extending radially outwardly toward the front side. This inclined surface 84 particularly substantially has a truncated conical shape over the entire circumference and, as shown in FIG. 5, is connected to the drain channel 32 of the outer tube portion 30 in a state where the rubber plug 80 is mounted in the housing 11. That is, the rubber plug 80 is so mounted into the housing 11 that the rear end of the drain channel 32 is connected or corresponds to the front end of the inclined surface 84. Note that an angle of inclination of the inclined surface 84 particularly is somewhat larger than that of the drain channel 32.

As shown in FIG. 11, one or more, particularly a plurality of annular lip portions particularly are circumferentially provided on the outer peripheral surface of the peripheral wall portion 83. These lip portions substantially are squeezed over the entire circumference by the inner peripheral surface of the outer tube portion 30 as shown in FIG. 5, whereby a sealing function is fulfilled. In this way, a sealed space 33 is formed in the outer tube portion 30. This sealed space 33 particularly is formed by the inner peripheral surface of the outer tube portion 30, the outer peripheral surface of the inner tube portion 20, the inclined surface 84 of the rubber plug 80 and the like. Since the sealed space 33 substantially communicates with the atmosphere through the drain port 42, the internal pressure of the sealed space 33 can be made substantially equal to an atmospheric pressure. Note that a mold removal hole 45 left in forming the lock portion 12 particularly is formed above the inner tube portion 20 in the mounting plate 40, and the sealed space 33 communicates with the atmosphere also by this mold removal hole 45.

A positioning hole 86 is formed in the rear surface of the peripheral wall portion 83 as shown in FIG. 11. As shown in FIG. 5, at least one positioning projection 94 provided on the plug holder (rubber plug presser) 90 is press-fitted into this positioning hole 86. Further, forward and backward movements of the rubber plug 80 particularly are prevented by mounting the base plate portion 82 between the retainer 70 and the rubber plug presser 90 in forward and backward directions FBD substantially without forming any clearance.

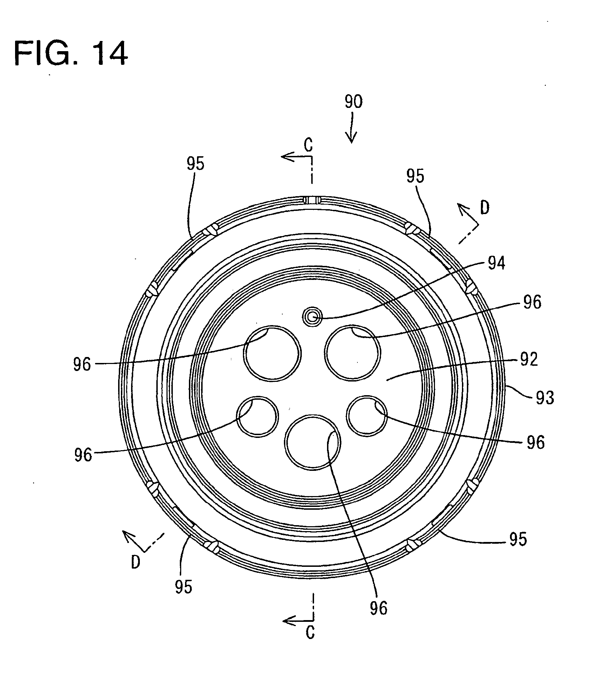

The rubber plug presser 90 (as a particular plug holder) is made e.g. of synthetic resin and, as shown in FIG. 14, includes a pressing portion 92 formed with one or more, particularly a plurality of wire insertion holes 96 (which particularly come in two larger and smaller sizes), and an outer wall portion 93 standing or projecting from the peripheral edge of the pressing portion 92. The one or more respective wire insertion holes 96 are arranged to substantially correspond to the one or more respective seal holes 81 of the rubber plug 80 and the one or more wires W pulled out backward from the respective seal holes 81 can be inserted through the wire insertion holes 96. Note that the positioning projection 94 for positioning the rubber plug 80 in a circumferential direction particularly is provided on the front surface of the pressing portion 92. This positioning projection 94 particularly is press-fitted into the positioning hole 96 formed in the rear surface of the base plate portion 82 of the rubber plug 80.

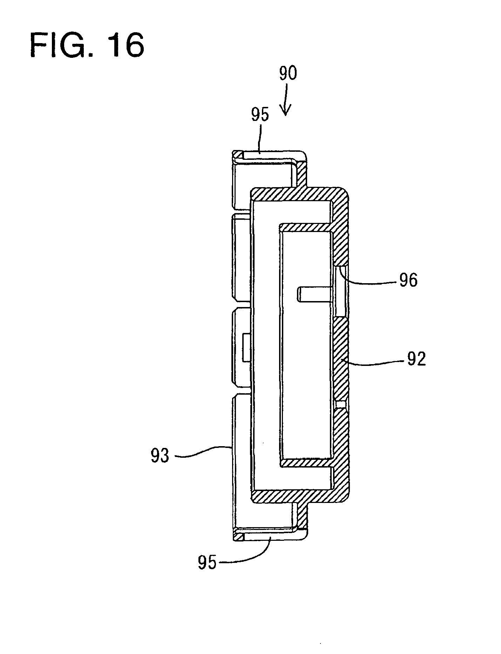

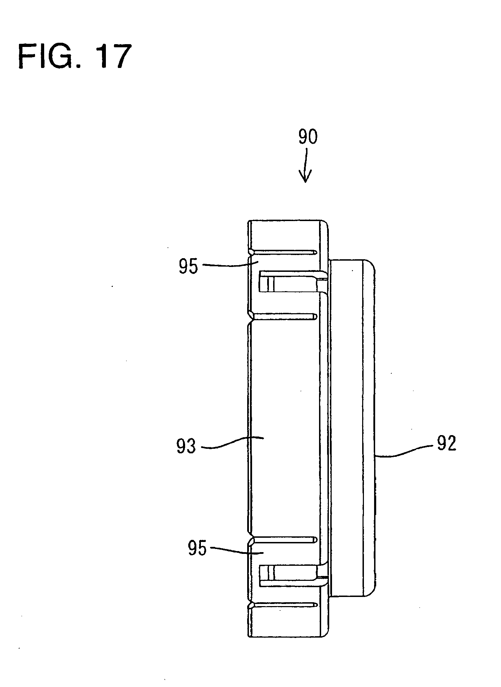

As shown in FIGS. 16 and 17, one or more, particularly a plurality of locking pieces 95 are provided on the outer wall portion 93. These locking pieces 95 are to be engaged with the corresponding locking projections 31 of the outer tube portion 30 in forward and backward directions FBD when the rubber plug presser 90 is mounted into or to the housing 11. In this way, the rubber plug presser 90 is held or positioned at the rear end opening of the outer tube portion 30 and the rubber plug 80 is held and retained in the outer tube portion 30, particularly in a slightly compressed state.

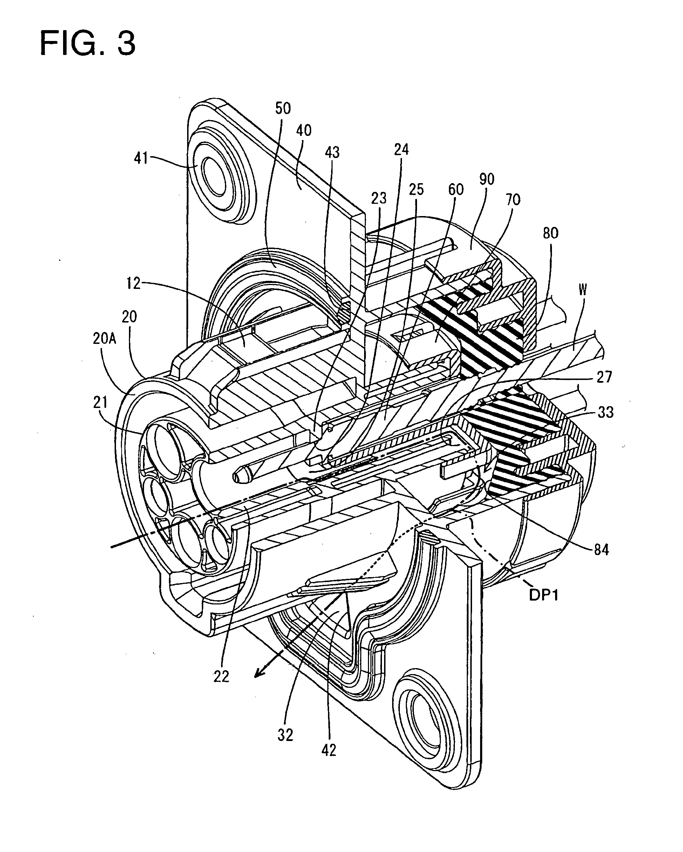

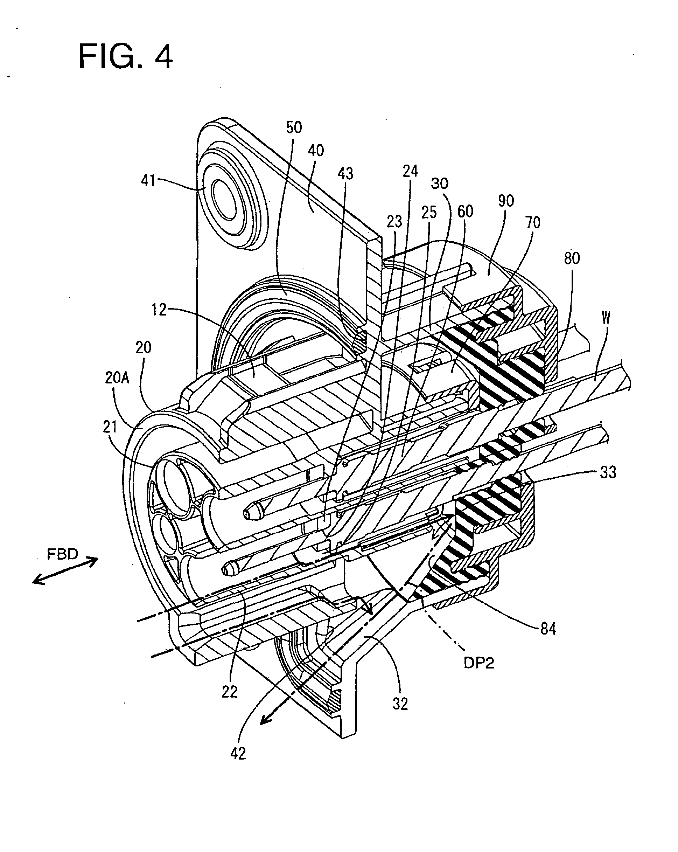

Here, a drainage structure in the sealed space 33 is described with reference to FIGS. 3 and 4. First, as shown in FIG. 3, if water or any other fluid or liquid enters (any of) a pair of left and right larger cylindrical portions 22 arranged in an upper part in the terminal accommodating portion 21, this water enters the sealed space 33 through the escape holes 25 of the partition walls 23. The water having entered the sealed space 33 is guided obliquely downwardly toward the outer periphery of the terminal accommodating portion 21 via the one or more drain plates 27 and brought to the drain channel 32 along the inclined surface 84 of the rubber plug 80. The water brought to the drain channel 32 is drained to the outside of the vehicle through the drain port 42. Accordingly, the water or other liquid can be drained through this drain or drainage path DP1.

Next, if water or any other fluid or liquid enters the larger cylindrical portion 22 e.g. arranged in a lower central part in the terminal accommodating portion 21 as shown in FIG. 4, this water enters the sealed space 33 through the escape hole 25 of the partition wall 23. The water having entered the sealed space 33 flows downwardly along the inclined surface 84 of the rubber plug 80 and drained to the outside of the vehicle through the drain port 42. Thus, the water or other liquid can be drained through this drain or drainage path DP2. Accordingly, the water having entered the sealed space 33 does not penetrate to a vehicle inner side of the outer panel P (inside of the vehicle) and is reliably drained to the outside of the vehicle. Thus, it can be prevented that devices such as a battery installed in the vehicle are wetted. Further, since the sealed space 33 communicates with the atmosphere through the drain port 42 and the internal pressure of the sealed space 33 is equal to the atmospheric pressure, there is no possibility of the reverse flow of the water into the sealed space 33 and the like.

This embodiment is configured as described above. Next, functions of this embodiment are described. First, in assembling the vehicle-side connector 10, the wire connecting portion(s) 62 of the terminal fitting(s) 60 is/are connected (particularly crimped, bent or folded and connected) to the core(s) of the wire(s) W and the terminal fitting(s) 60 is/are at least partly inserted into the cylindrical portion(s) 22 particularly substantially from behind. Then, the (front) stop portion(s) 63 of the terminal fitting(s) 60 come(s) into contact with the partition wall(s) 23 particularly substantially from behind, whereby the terminal fitting(s) 60 are positioned or stopped at their propoer position(s), particularly at their front end position(s). Thereafter, the retainer 70 is mounted into or to (particularly the rear end opening of) the terminal accommodating portion 21 from behind. In mounting the retainer 70, the contact portion(s) 72 at least partly is/are inserted into the cylindrical portion(s) 22 (particularly substantially from behind) and brought into contact with the rear surface(s) of the (front) stop portion(s) 63. Simultaneously with this, the retaining piece(s) 71 particularly is/are engaged with the retaining projection(s) 26, whereby the retainer 70 is held at (particularly the rear end opening of) the terminal accommodating portion 21. In this way, the terminal fitting(s) 60 is/are held and retained in the cylindrical portion(s) 22. Subsequently, the rubber plug 80 (as a particular resilient plug) mounted on the wire(s) W in advance is mounted into the outer tube portion 30 from behind and the rubber plug presser 90 (as a particular plug holder) is mounted into or to (particularly the rear end opening of) the outer tube portion 30. In this way, the rubber plug 80 is held in the outer tube portion 30 to form the sealed space 33.

In charging the battery of the vehicle, the charging connector is or can be connected to the vehicle-side connector 10. At this time, a small connecting force is sufficient since the air in the sealed space 33 escapes to the outside of the vehicle through the drain port 42. Rainwater may splash on the vehicle-side connector 10 at the time of charging and/or an electrically conductive liquid may splash on the vehicle-side connector 10 at the time of washing the vehicle. In such cases, it is necessary to quickly drain liquid, rainwater or the like having splashed on the vehicle-side connector 10 to the outside of the vehicle.

Accordingly, water pooled or entered in the cylindrical portions 22 is drained into the sealed space 33 through the escape holes 25 and the water in the sealed space 33 is brought to the drain port 42, for example, by two drain paths DP1, DP2 and drained to the outside of the vehicle from the drain port 42. The first drain path DP1 particularly is a path passing the escape holes 25, the drain plates 27, the drain channel 32 and the like. The second drain path DP2 particularly is a path passing the escape holes 25, the inclined surface 84, the drain channel 32 and the like. In this way, the water or any other liquid in the cylindrical portions 22 is quickly discharged to the outside of the vehicle.

As described above, in this embodiment, the outer tube portion 30 is provided at the vehicle inner side of the mounting plate 40 and the rubber plug 80 is mounted into or to (particularly the rear end opening of) this outer tube portion 30, whereby the sealed space 33 is formed in the outer tube portion 30 and water having entered the sealed space 33 can be drained to the outside of the vehicle along the inclined surface 84 of the rubber plug 80 and the drain channel 32. Further, the reverse flow of water from the drain port 42 into the sealed space 33 particularly can be avoided. In this way, the entrance of water into the inside of the vehicle particularly can be avoided and water in the sealed space 33 can be reliably drained to the outside of the vehicle through the drain port 42.

Further, since the base plate portion 82 of the rubber plug 80 particularly is arranged between the retainer 70 and the pressing portion 92 of the rubber plug presser 90, the rubber plug 80 can be reliably held without moving in forward and backward directions FBD.

Accordingly, to prevent the reverse flow of drained water by draining water having entered a vehicle-side connector to the outside of a vehicle, a vehicle-side connector 10 includes a mounting plate 40 which is to be fixed to an outer panel or body part P of a vehicle, an inner tube portion 20 which is so provided at the mounting plate 40 as to penetrate through the mounting plate 40, an outer tube portion 30 (which particularly at least partly surrounds an outer peripheral side of the inner tube portion 20 over the entire circumference) in such a manner as to project from the mounting plate 40 toward the inside of the vehicle and have an open projecting end, a rubber plug 80 (as a particular resilient plug) which forms a sealed space 33 in the outer tube portion 30 by sealing between wire(s) W pulled into the inside of the vehicle from the interior of the inner tube portion 20 and an opening of the outer tube portion 30, a rubber plug presser 90 (as a particular plug holder) which is mounted to the outer tube portion 30 (particularly at least partly in the opening of the outer tube portion 30) to retain the rubber plug 80, an inclined surface 84 which is provided in the sealed space 33 and inclined downwardly toward the outside of the vehicle, a drain channel 32 and a drain port 42 which penetrates though the mounting plate 40 and drains water from the drain channel 32 to the outside of the vehicle.

### <Other Embodiments>

The present invention is not limited to the above described and illustrated embodiment. For example, the following embodiments are also included in the technical scope of the present invention.
(1) Although a water guide portion is formed by the inclined surface 84 of the rubber plug 80 and the drain channel 32 of the outer tube portion 30 in the above embodiment, it may be formed only by the drain channel of the outer tube portion according to the present invention.
(2) Although the terminal fitting(s) 60 is/are retained only by the retainer 70 in the above embodiment, one or more locking lances may be formed in the respective cylindrical portion(s) 22 and the terminal fitting(s) 60 may be retained by the terminal fitting(s) 60 according to the present invention.
(3) Although the outer tube portion 30 is integrally or unitarily formed to the mounting plate 40 in the above embodiment, the outer tube portion and the mounting plate may be separately formed and connected in a sealed state by a seal ring according to the present invention. Further, although the inner tube portion 20 is integrally or unitarily formed to the mounting plate 40 in the above embodiment, the inner tube portion and the mounting plate may be separately formed and connected in a sealed state by a seal ring according to the present invention.

### Reference Numerals

- 10 ...: vehicle-side connector
- 11 ...: housing
- 20 ...: inner tube portion (first tube portion)
- 30 ...: outer tube portion (second tube portion)
- 32 ...: drain channel (water guide portion)
- 33 ...: sealed space
- 40 ...: mounting plate
- 42 ...: drain port
- 50 ...: rubber ring (sealing ring)
- 60 ...: terminal fitting
- 70 ...: retainer
- 80 ...: rubber plug (resilient plug)
- 81 ...: seal hole
- 82 ...: base plate portion
- 83 ...: peripheral wall portion
- 84 ...: inclined surface (water guide portion)
- 90 ...: rubber plug presser (plug holder)
- P ...: outer panel (body)
- W ...: wire

## Claims

1. A vehicle-side connector (10) to be connected to a charging connector at the time of charging, comprising:
a mounting plate (40) which is to be fixed to a body part (P) of a vehicle;
a first tube portion (20) which is so provided at the mounting plate (40) as to at least partly penetrate through the mounting plate (40);
a second tube portion (30) projecting from the mounting plate (40) toward the inside of the vehicle and have an open projecting end;
a resilient plug (80) which forms a sealed space (33) in the second tube portion (30) by sealing between a wire (W) pulled into the inside of the vehicle from the interior of the first tube portion (20) and an opening of the second tube portion (30);
a plug holder (90) which is mounted to the second tube portion (30) to retain the resilient plug (80);
**characterized in that** the vehicle-side connector (10) further comprises:
at least one fluid guide portion (32; 84) which is provided in the sealed space (33) and inclined downwardly toward the outside of the vehicle; and
at least one drain port (42) which penetrates though the mounting plate (40) and drains fluid from the fluid guide portion (32; 84) to the outside of the vehicle.

2. A vehicle-side connector according to claim 1, wherein the second tube portion (30) at least partly surrounds an outer peripheral side of the first tube portion (20) over the entire circumference.

3. A vehicle-side connector according to any one of the preceding claims, wherein the plug holder (90) is mounted in the opening of the second tube portion (30) to retain the resilient plug (80).

4. A vehicle-side connector according to any one of the preceding claims, further comprising:
at least one terminal fitting (60) which is to be connected to an end of the wire (W) and at least partly accommodated in the first tube portion (20); and
a retainer (70) which is mounted in an opening of the first tube portion (20) to retain the terminal fitting (60).

5. A vehicle-side connector according to claim 4, wherein the resilient plug (80) includes a base plate portion (82) formed with at least one seal hole (81) through which the wire (W) is inserted in a sealed state.

6. A vehicle-side connector according to claim 4 or 5, wherein the resilient plug (80) includes a peripheral wall portion (83) particularly being tapered and standing from the peripheral edge of the base plate portion (82).

7. A vehicle-side connector according to claim 6, wherein the fluid guide portion (32; 84) is provided from the peripheral wall portion (83) to the second tube portion (30).

8. A vehicle-side connector according to claim 5, 6 or 7, wherein forward and backward movements of the resilient plug (80) are prevented by mounting the base plate portion (82) between the retainer (70) and the plug holder (90) in forward and backward directions (FBD) substantially without forming any clearance.

9. A vehicle-side connector according to any one of the preceding claims, wherein the fluid guide portion (32; 84) comprises a portion having a tapered shape as to be enlarged downwardly toward the mounting plate (40).

10. A vehicle-side connector according to any one of the preceding claims, wherein fluid having entered a portion (22) of the first tube portion (20) and reached the sealed space (33) is guided obliquely downwardly via one or more drain plates (27) and brought to a drain channel (32) along an inclined surface (84) of the resilient plug (80) and then drained (DP1; DP2) to the outside of the vehicle through the drain port (42).

11. A mounting method for a vehicle-side connector (10) to be connected to a charging connector at the time of charging, comprising the following steps:
fixing a mounting plate (40) to a body part (P) of a vehicle;
providing an first tube portion (20) at the mounting plate (40) as to at least partly penetrate through the mounting plate (40);
providing a second tube portion (30) projecting from the mounting plate (40) toward the inside of the vehicle and have an open projecting end;
mounting a resilient plug (80) such as to form a sealed space (33) in the second tube portion (30) by sealing between a wire (W) pulled into the inside of the vehicle from the interior of the first tube portion (20) and an opening of the second tube portion (30);
mounting a plug holder (90) to the second tube portion (30) to retain the resilient plug (80);
**characterized in that** the mounting method further comprises the steps of:
providing at least one fluid guide portion (32; 84) in the sealed space (33) and inclined downwardly toward the outside of the vehicle; and
providing at least one drain port (42) which penetrates though the mounting plate (40) and drains fluid from the fluid guide portion (32; 84) to the outside of the vehicle.

12. A method according to claim 11, wherein the second tube portion (30) is provided so as to at least partly surround an outer peripheral side of the first tube portion (20) over the entire circumference.

13. A method according to claim 11 or 12, wherein the plug holder (90) is mounted in the opening of the second tube portion (30) to retain the resilient plug (80).

14. A method according to any one of the preceding claims 11 to 13, further comprising the following steps:
connecting at least one terminal fitting (60) to an end of the wire (W) and at least partly accommodated in the first tube portion (20); and
mounting a retainer (70) in an opening of the first tube portion (20) to retain the terminal fitting (60).

15. A method according to claim 14, wherein the resilient plug (80) includes a base plate portion (82) formed with at least one seal hole (81) through which the wire (W) is inserted in a sealed state, wherein forward and backward movements of the resilient plug (80) preferably are prevented by mounting the base plate portion (82) between the retainer (70) and the plug holder (90) in forward and backward directions (FBD) substantially without forming any clearance.

## Patentansprüche

1. Fahrzeugseitiger Verbinder (10), der mit einem Ladeverbinder zum Zeitpunkt des Ladens zu verbinden ist, umfassend:
eine Montageplatte (40), die an einem Körper- bzw. Karosserieteil (P) eines Fahrzeugs zu fixieren bzw. zu befestigen ist;
einen ersten Rohrabschnitt (20), der so an der Montageplatte (40) bereitgestellt ist, dass er zumindest teilweise durch die Montageplatte (40) penetriert;
einen zweiten Rohrabschnitt (30), der von der Montageplatte (40) zu der Innenseite des Fahrzeugs hin vorragt und ein offenes vorspringendes Ende aufweist;
einen rückstellfähigen Stecker (80), der einen abgedichteten Raum (33) in dem zweiten Rohrabschnitt (30) bildet durch Abdichten zwischen einem Draht (W), der in das Innere des Fahrzeugs von dem Inneren des ersten Rohrabschnitts (20) aus gezogen ist, und einer Öffnung des zweiten Rohrabschnitts (30);
einen Steckerhalter (90), der an dem zweiten Rohrabschnitt (30) montiert ist, um den rückstellfähigen Stecker (80) zu halten bzw. zurückzuhalten;
**dadurch gekennzeichnet, dass** der fahrzeugseitige Verbinder (10) ferner umfasst:
zumindest einen Fluid- bzw. Flüssigkeitsführungsabschnitt (32; 84), der in dem abgedichteten Raum (33) bereitgestellt ist und nach unten zu der Außenseite des Fahrzeugs hin geneigt ist; und
zumindest eine Ablassöffnung (42), die durch die Montageplatte (40) penetriert und Fluid bzw. Flüssigkeit aus dem Fluid- bzw. Flüssigkeitsführungsabschnitt (32; 84) zu der Außenseite des Fahrzeugs hin ablässt.

2. Fahrzeugseitiger Verbinder nach Anspruch 1, wobei der zweite Rohrabschnitt (30) zumindest teilweise eine äußere periphere Seite des ersten Rohrabschnitts (20) über den gesamten Umfang umgibt.

3. Fahrzeugseitiger Verbinder nach einem der vorhergehenden Ansprüche, wobei der Steckerhalter (90) in der Öffnung des zweiten Rohrabschnitts (30) montiert ist, um den rückstellfähigen Stecker (80) zurückzuhalten.

4. Fahrzeugseitiger Verbinder nach einem der vorhergehenden Ansprüche, ferner umfassend:
zumindest ein Anschlusspassstück bzw. -kontakt (60), das bzw. der mit einem Ende des Drahts (W) zu verbinden ist und zumindest teilweise in dem ersten Rohrabschnitt (20) aufgenommen ist; und
eine Rückhalteeinrichtung (70), die in einer Öffnung des ersten Rohrabschnitts (20) montiert ist, um das Anschlusspassstück (60) zurückzuhalten.

5. Fahrzeugseitiger Verbinder nach Anspruch 4, wobei der rückstellfähige Stekker (80) einen Basisplattenabschnitt (82) enthält, der mit zumindest einem Dichtungsloch (81) gebildet ist, durch das der Draht (W) in einem abgedichteten Zustand eingesetzt ist.

6. Fahrzeugseitiger Verbinder nach Anspruch 4 oder 5, wobei der rückstellfähige Stecker (80) einen peripheren Wandabschnitt (83) enthält, der insbesondere verjüngt ist und von der peripheren Kante bzw. Rand des Basisplattenabschnitts (82) absteht.

7. Fahrzeugseitiger Verbinder nach Anspruch 6, wobei der Flüssigkeitsführungsabschnitt (32; 84) von dem peripheren Wandabschnitt (83) zu dem zweiten Rohrabschnitt (30) bereitgestellt ist.

8. Fahrzeugseitiger Verbinder nach Anspruch 5, 6 oder 7, wobei Vorwärts- und Rückwärtsbewegungen des rückstellfähigen Steckers (80) verhindert werden, indem der Basisplattenabschnitt (82) zwischen der Rückhalteeinrichtung (70) und dem Steckerhalter (90) in Vorwärts- und Rückwärtsrichtung (FBD) im Wesentlichen ohne Bilden eines Zwischenraums montiert ist.

9. Fahrzeugseitiger Verbinder nach einem der vorhergehenden Ansprüche, wobei der Flüssigkeitsführungsabschnitt (32; 84) einen Abschnitt umfasst, der eine verjüngte Form aufweist, um nach unten zu der Montageplatte (40) vergrößert zu sein.

10. Fahrzeugseitiger Verbinder nach einem der vorhergehenden Ansprüche, wobei Flüssigkeit, die in einen Abschnitt (22) des ersten Rohrabschnitts (20) eingedrungen ist und den abgedichteten Raum (33) erreicht hat, schräg nach unten über eine oder mehrere Ablassplatten (27) abgelassen wird und zu einem Ablasskanal (32) entlang einer geneigten Fläche bzw. Oberfläche (84) des rückstellfähigen Steckers (80) gebracht wird und dann zu der Außenseite des Fahrzeugs hin durch die Ablassöffnung (42) abgelassen (DP1; DP2) wird.

11. Montageverfahren für einen fahrzeugseitigen Verbinder (10), der mit einem Ladeverbinder zum Zeitpunkt des Ladens zu verbinden ist, umfassend die folgenden Schritte:
Fixieren bzw. Befestigen einer Montageplatte (40) an einem Körper- bzw. Karosserieteil (P) eines Fahrzeugs;
Bereitstellen eines ersten Rohrabschnitts (20) an der Montageplatte (40), so dass er zumindest teilweise durch die Montageplatte (40) penetriert;
Bereitstellen eines zweiten Rohrabschnitts (30), der von der Montageplatte (40) zu der Innenseite des Fahrzeugs hin vorragt und ein offenes vorspringendes Ende aufweist;
Montieren eines rückstellfähigen Steckers (80), der einen abgedichteten Raum (33) in dem zweiten Rohrabschnitt (30) bildet, und zwar durch Abdichten zwischen einem Draht (W), der in das Innere des Fahrzeugs von dem Inneren des ersten Rohrabschnitts (20) aus gezogen wird, und einer Öffnung des zweiten Rohrabschnitts (30);
Montieren eines Steckerhalters (90) an dem zweiten Rohrabschnitt (30) montiert, um den rückstellfähigen Stecker (80) zu halten bzw. zurückzuhalten;
**dadurch gekennzeichnet, dass** das Montageverfahren ferner die Schritte umfasst:
Bereitstellen zumindest eines Fluid- bzw. Flüssigkeitsführungsabschnitts (32; 84) in dem abgedichteten Raum (33), und der nach unten zu der Außenseite des Fahrzeugs hin geneigt ist; und
Bereitstellen zumindest einer Ablassöffnung (42), die durch die Montageplatte (40) penetriert und Fluid bzw. Flüssigkeit aus dem Fluid- bzw. Flüssigkeitsführungsabschnitt (32; 84) zu der Außenseite des Fahrzeugs hin ablässt.

12. Verfahren nach Anspruch 11, wobei der zweite Rohrabschnitt (30) so bereitgestellt wird, dass er zumindest teilweise eine äußere periphere Seite des ersten Rohrabschnitts (20) über den gesamten Umfang umgibt.

13. Verfahren nach Anspruch 11 oder 12, wobei der Steckerhalter (90) in der Öffnung des zweiten Rohrabschnitts (30) montiert wird, um den rückstellfähigen Stecker (80) zurückzuhalten.

14. Verfahren nach einem der vorhergehenden Ansprüche 11 bis 13, ferner umfassend die folgenden Schritte:
Verbinden zumindest eines Anschlusspassstücks bzw. -kontakts (60) mit einem Ende des Drahts (W), und das bzw. der zumindest teilweise in dem ersten Rohrabschnitt (20) aufgenommen wird; und
Montieren einer Rückhalteeinrichtung (70) in einer Öffnung des ersten Rohrabschnitts (20), um das Anschlusspassstück (60) zurückzuhalten.

15. Verfahren nach Anspruch 14, wobei der rückstellfähige Stecker (80) einen Basisplattenabschnitt (82) enthält, der mit zumindest einem Dichtungsloch (81) gebildet ist, durch das der Draht (W) in einem abgedichteten Zustand eingesetzt wird, wobei Vorwärts- und Rückwärtsbewegungen des rückstellfähigen Steckers (80) vorzugsweise verhindert werden, indem der Basisplattenabschnitt (82) zwischen der Rückhalteeinrichtung (70) und dem Steckerhalter (90) in Vorwärts- und Rückwärtsrichtung (FBD) im Wesentlichen ohne Bilden eines Zwischenraums montiert wird.

## Revendications

1. Connecteur de côté de véhicule (10) devant être connecté à un connecteur de chargement au moment du chargement, comprenant :
une plaque de montage (40) qui doit être fixée à une partie de carrosserie (P) d'un véhicule ;
une première portion de tube (20) qui est prévue au niveau de la plaque de montage (40) de manière à pénétrer au moins partiellement à travers la plaque de montage (40) ;
une seconde portion de tube (30) faisant saillie depuis la plaque de montage (40) vers l'intérieur du véhicule et ayant une extrémité saillante ouverte ;
une prise élastique (80) qui forme un espace scellé (33) dans la seconde portion de tube (30) en scellant entre un fil métallique (W) tiré dans l'intérieur du véhicule depuis l'intérieur de la première portion de tube (20) et une ouverture de la seconde portion de tube (30) ;
un support de prise (90) qui est monté sur la seconde portion de tube (30) pour retenir la prise élastique (80) ;
**caractérisé en ce que** le connecteur de côté de véhicule (10) comprend en outre :
au moins une portion de guidage de fluide (32 ; 84) qui est prévue dans l'espace scellé (33) et inclinée vers le bas vers l'extérieur du véhicule ; et
au moins un orifice d'évacuation (42) qui pénètre à travers la plaque de montage (40) et évacue du fluide de la portion de guidage de fluide (32 ; 84) vers l'extérieur du véhicule.

2. Connecteur de côté de véhicule selon la revendication 1, dans lequel la seconde portion de tube (30) entoure au moins partiellement un côté périphérique externe de la première portion de tube (20) sur la circonférence entière.

3. Connecteur de côté de véhicule selon l'une quelconque des revendications précédentes, dans lequel le support de prise (90) est monté dans l'ouverture de la seconde portion de tube (30) pour retenir la prise élastique (80).

4. Connecteur de côté de véhicule selon l'une quelconque des revendications précédentes, comprenant en outre :
au moins une garniture terminale (60) qui doit être connectée à une extrémité du fil métallique (W) et reçue au moins partiellement dans la première portion de tube (20) ; et
un dispositif de retenue (70) qui est monté dans une ouverture de la première portion de tube (20) pour retenir la garniture terminale (60).

5. Connecteur de côté de véhicule selon la revendication 4, dans lequel la prise élastique (80) inclut une portion de plaque de base (82) formée d'au moins un orifice d'étanchéité (81) à travers lequel le fil métallique (W) est inséré dans un état scellé.

6. Connecteur de côté de véhicule selon la revendication 4 ou 5, dans lequel la prise élastique (80) inclut une portion de paroi périphérique (83) qui est notamment conique et s'érige depuis le bord périphérique de la portion de plaque de base (82).

7. Connecteur de côté de véhicule selon la revendication 6, dans lequel la portion de guidage de fluide (32 ; 84) est prévue de la portion de paroi périphérique (83) à la seconde portion de tube (30).

8. Connecteur de côté de véhicule selon la revendication 5, 6 ou 7, dans lequel des mouvements vers l'avant et l'arrière de la prise élastique (80) sont empêchés par le montage de la portion de plaque de base (82) entre le dispositif de retenue (70) et le support de prise (90) dans des directions vers l'avant et l'arrière (FBD) essentiellement sans former d'espace libre.

9. Connecteur de côté de véhicule selon l'une quelconque des revendications précédentes, dans lequel la portion de guidage de fluide (32 ; 84) comprend une portion ayant une forme conique de manière à être élargie vers le bas vers la plaque de montage (40).

10. Connecteur de côté de véhicule selon l'une quelconque des revendications précédentes, dans lequel du fluide ayant pénétré dans une portion (22) de la première portion de tube (20) et atteint l'espace scellé (33) est guidé de manière oblique vers le bas par le biais d'une ou plusieurs plaques d'évacuation (27) et amené à un canal d'évacuation (32) le long d'une surface inclinée (84) de la prise élastique (80), puis évacué (DP1 ; DP2) vers l'extérieur du véhicule à travers l'orifice d'évacuation (42).

11. Procédé de montage pour un connecteur de côté de véhicule (10) devant être connecté à un connecteur de chargement au moment du chargement, comprenant les étapes suivantes :
fixer une plaque de montage (40) à une partie de carrosserie (P) d'un véhicule ;
prévoir une première portion de tube (20) au niveau de la plaque de montage (40) de manière à pénétrer au moins partiellement à travers la plaque de montage (40) ;
prévoir une seconde portion de tube (30) faisant saillie depuis la plaque de montage (40) vers l'intérieur du véhicule et ayant une extrémité saillante ouverte ;
monter une prise élastique (80) de manière à former un espace scellé (33) dans la seconde portion de tube (30) en scellant entre un fil métallique (W) tiré dans l'intérieur du véhicule depuis l'intérieur de la première portion de tube (20) et
une ouverture de la seconde portion de tube (30) ;
monter un support de prise (90) sur la seconde portion de tube (30) pour retenir la prise élastique (80) ;
**caractérisé en ce que** le procédé de montage comprend en outre les étapes consistant à :
prévoir au moins une portion de guidage de fluide (32 ; 84) dans l'espace scellé (33) et inclinée vers le bas vers l'extérieur du véhicule ; et
prévoir au moins un orifice d'évacuation (42) qui pénètre à travers la plaque de montage (40) et évacue du fluide de la portion de guidage de fluide (32 ; 84) vers l'extérieur du véhicule.

12. Procédé selon la revendication 11, dans lequel la seconde portion de tube (30) est prévue de manière à entourer au moins partiellement un côté périphérique externe de la première portion de tube (20) sur la circonférence entière.

13. Procédé selon la revendication 11 ou 12, dans lequel le support de prise (90) est monté dans l'ouverture de la seconde portion de tube (30) pour retenir la prise élastique (80).

14. Procédé selon l'une quelconque des revendications précédentes 11 à 13, comprenant en outre les étapes suivantes :
connecter au moins une garniture terminale (60) à une extrémité du fil métallique (W) et reçue au moins partiellement dans la première portion de tube (20) ; et
monter un dispositif de retenue (70) dans une ouverture de la première portion de tube (20) pour retenir la garniture terminale (60).

15. Procédé selon la revendication 14, dans lequel la prise élastique (80) inclut une portion de plaque de base (82) formée d'au moins un orifice d'étanchéité (81) à travers lequel le fil métallique (W) est inséré dans un état scellé, dans lequel des mouvements vers l'avant et l'arrière de la prise élastique (80) sont de préférence empêchés par le montage de la portion de plaque de base (82) entre le dispositif de retenue (70) et le support de prise (90) dans des directions vers l'avant et l'arrière (FBD) essentiellement sans former d'espace libre.
